(19) Europäisches Patentamt
European Patent Office
Office européen des brevets

(11) EP 4 435 056 A1

(12) **EUROPEAN PATENT APPLICATION**
published in accordance with Art. 153(4) EPC

(43) Date of publication:
**25.09.2024 Bulletin 2024/39**

(21) Application number: **22895248.7**

(22) Date of filing: **29.09.2022**

(51) International Patent Classification (IPC):
***C08L 81/02*** $^{(2006.01)}$ ***C08J 3/20*** $^{(2006.01)}$
***C08K 3/18*** $^{(2006.01)}$ ***C08K 3/26*** $^{(2006.01)}$
***C08K 3/34*** $^{(2006.01)}$

(52) Cooperative Patent Classification (CPC):
**C08J 3/20; C08K 3/18; C08K 3/26; C08K 3/34; C08L 81/02**

(86) International application number:
**PCT/JP2022/036339**

(87) International publication number:
**WO 2023/089962 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.11.2021 JP 2021187748**

(71) Applicant: **DIC Corporation**
**Tokyo 174-8520 (JP)**

(72) Inventors:
- **MATSUMOTO Nobuyuki**
  **Ichihara-shi, Chiba 290-8585 (JP)**
- **KUNISHIGE Masashi**
  **Ichihara-shi, Chiba 290-8585 (JP)**

(74) Representative: **Kraus & Lederer PartGmbB**
**Thomas-Wimmer-Ring 15**
**80539 München (DE)**

# (54) POLY(ARYLENE SULFIDE) RESIN MIXTURE, RESIN COMPOSITION, MOLDED ARTICLE, AND PRODUCTION METHODS THEREFOR

(57) Provided are a polyarylene sulfide (PAS) resin molded article containing a PAS resin and inorganic particles and having excellent moldability and mechanical characteristics, a PAS resin composition which can provide the molded article and generates a small amount of gas, and a resin mixture which can provide the resin composition, and production methods therefor. In further detail, provided are a PAS resin mixture containing a PAS resin (A) and inorganic particles (B), in which the amount of water derived from the inorganic particles (B) is 0.2 to 5 parts by mass relative to 1 00 parts by mass of the PAS resin(A), and the inorganic particles (B) are a silicate salt and/or a hydrotalcite compound, a PAS resin composition, and a molded article, and production methods therefor.

EP 4 435 056 A1

## Description

Technical Field

The present invention relates to a polyarylene sulfide resin mixture, a resin composition, and a molded article, and production methods therefor.

Background Art

In recent years, engineering plastics having excellent productivity and high heat resistance have been developed, and because of lightweight, they have been widely used as materials alternative to metal materials as members for electric and electronic devices, automobile, and the like. In particular, a polyarylene sulfide (represented by "PAS "hereafter) resin represented by a polyphenylene sulfide (represented by "PPS" hereinafter) resin has excellent heat resistance and excellent mechanical strength, chemical resistance, moldability, and dimensional stability and thus is widely used in the automobile components and electric/electronic field, and the like.

The PAS resin has a high molding temperature and thus generates a large amount of gas during processing, thereby causing various problems. For example, the low-molecular weight impurities contained in the generated gas adhere to the surface of a molded article and cause an appearance defect, adhere to a molding machine and a mold and cause a molding defect and a decrease in continuous moldability due to sticking of a molded article, and contaminate the inserted metal and thus decrease bonding strength.

A method known as a method for decreasing the gas generated by a PAS resin composition includes adding carbon nanotubes to a PAS resin (for example, refer to Patent Literature 1). However, the viscosity of the PAS polymer used in this method is limited. Also, there is disclosed a method of adding zinc oxide whiskers, phosphoric acid or hypophosphorous acid, or a salt thereof (for example, refer to Patent Literature 2). However, the resultant PAS resin composition is unsatisfactory in the effect of suppressing the gas generated during melting and is not excellent in mechanical strength, thereby creating a room for further investigation.

Citation List

Patent Literature

PTL 1: Japanese Unexamined Patent Application Publication No. 2006-143827
PTL 2: Japanese Unexamined Patent Application Publication No. 11-100505

Summary of Invention

Technical Problem

Accordingly, a problem to be solved by the present invention is to provide a PAS molded article having excellent mechanical characteristics, a PAS resin composition which can provide the molded article, generates a small amount of gas during melting, and has excellent moldability, and a resin mixture which can provide the resin composition, and production methods therefor.

Solution to Problem

As a result of earnest investigation for solving the problem, the inventors found that by using a mixture of a PAS resin combined with specific inorganic particles maintaining a proper amount of water, the gas generated from a PAS resin composition is decreased, and moldability and the mechanical characteristics of a resultant molded article are excellent, leading to the achievement of the present invention.

That is, the present disclosure relates to a PAS resin mixture containing a PAS resin (A) and inorganic particles (B), in which the amount of water derived from the inorganic particles (B) is 0.2 to 5 parts by mass relative to 100 parts by mass of the PAS resin (A), and the inorganic particles (B) are a silicate salt and/or a hydrotalcite compound.

Also, the present disclosure relates to a resin composition prepared by melt-kneading the PAS resin mixture.

Also, the present disclosure relates to a molded article produced by molding the PAS resin composition.

Also, the present disclosure relates to a method for producing a PAS resin mixture by mixing a PAS resin (A) and inorganic particles (B) as essential components, the method including a step (1) of adjusting the amount of water

in the inorganic particles (B) to 15% to 70% by mass, and a step (2) of obtaining a mixture by mixing the PAS resin (A) and the inorganic particles (B) at a ratio such that the amount of water derived from the inorganic particles (B) is 0.2 to 5 parts by mass relative to 100 parts by mass of the PAS resin (A), and the inorganic particles (B) being a silicate salt and/or a hydrotalcite compound.

Further, the present disclosure relates to a method for producing a PAS resin composition including a step of producing a PAS resin mixture by the production method described above, and a step of melt-kneading the resultant mixture within a temperature range higher than or equal to the melting point of the PAS resin (A).

Further, the present disclosure relates to a method for producing a molded article including a step of producing a PAS resin composition by the production method described above and a step of melt-molding the resultant PAS resin composition. Advantageous Effects of Invention

According to the present invention, it is possible to provide a molded article containing a PAS resin and inorganic particles and having excellent moldability and mechanical characteristics, a PAS resin composition which can provide the molded articles and generates a small amount of gas during melting, and a resin mixture which can provide the resin composition, and production methods therefor.

Description of Embodiments

An embodiment (referred to as a "present embodiment" hereinafter) of the present invention is described in detail below, but the present invention is not limited to the description below and various embodiments can be carried out within the range of the gist of the invention.

<PAS resin mixture>

A PAS resin mixture according to a present embodiment is a PAS resin mixture containing a PAS resin (A) and inorganic particles (B), in which the amount of water derived from the inorganic particles (B) is 0.2 to 5 parts by mass relative to 100 parts by mass of the PAS resin(A), and the inorganic particles (B) are a silicate salt and/or a hydrotalcite compound. Description thereof is made below.

<PAS resin (A)>

The PAS resin mixture according to the present embodiment contains the PAS resin (A) as an essential component.

The PAS resin has a resin structure having, as a repeating unit, a structure in which an aromatic ring and a sulfur atom are bonded to each other, and specifically, it is a resin having as repeating units a structural part represented by general formula (1) below,

[Chem. 1]

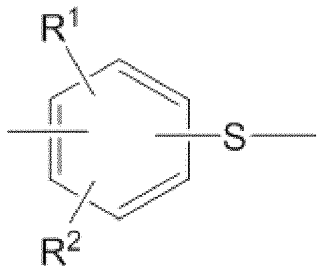

Formula (1)

(in the formula, $R^1$ and $R^2$ each independently represent a hydrogen atom, an alkyl group having a range of 1 to 4 carbon atoms, a nitro group, an amino group, a phenyl group, a methoxy group, or an ethoxy group), and, if required, a trifunctional structural part represented by general formula (2) below.

[Chem. 2]

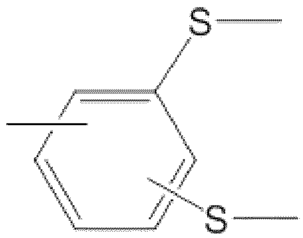

Formula (2)

The trifunctional structural part represented by the formula (2) is preferably within a range of 0.001 to 3 mol% and particularly preferably within a range of 0.01 to 1 mol% relative to the total number of moles including the other structural parts.

Herein, in the structural part represented by the general formula (1), particularly $R^1$ and $R^2$ in the structural part are preferably hydrogen atoms from the viewpoint of mechanical strength of the PAS resin. In this case, for example, there are bonding at the para-position represented by formula (3) below and bonding at the meta-position represented by formula (4) below.

[Chem. 3]

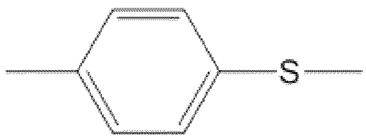

Formula(3)

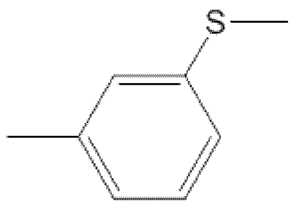

Formula(4)

In view of heat resistance and crystallinity of the PAS resin, the structure is preferably one in which in these formulae, particularly a sulfur atom is bonded at the para-position to an aromatic ring in the repeating unit as shown by the general formula (3).

Also, the PAS resin may contain not only the structural parts represented by the general formulae (1) and (2) but also structural parts represented by structural formulae (5) to (8) below in an amount of 30 mol% or less of the total including the structural parts represented by the general formula (1) and the general formula (2).

[Chem. 4]

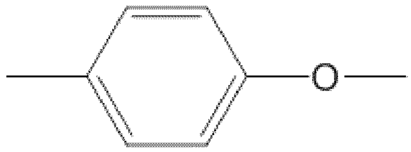

Formula (5)

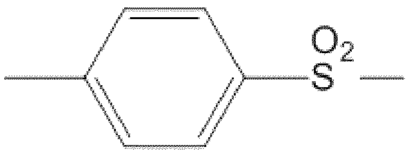

Formula (6)

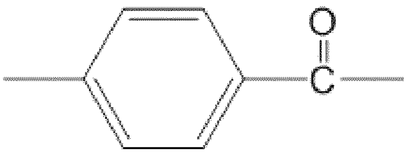

Formula (7)

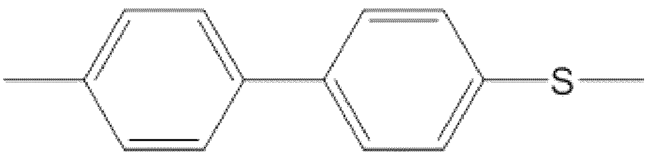

Formula (8)

In particular, in the present invention, the amount of the structural parts represented by the general formulae (5) to (8) is preferably 10 mol% or less in view of heat resistance and mechanical strength of the PAS resin. When the PAS resin contains the structural parts represented by the general formulae (5) to (8), the bonding form may be any one of a random copolymer and a block copolymer.

Also, the PAS resin may have a naphthyl sulfide bond or the like in its molecular structure, and the amount thereof is preferably 3 mol% or less and particularly preferably 1 mol% or less relative to the total number of moles including other structural unites.

In addition, the physical properties of the PAS resin are not particularly limited unless the effect of the present invention is impaired and are as follows.

(Melt viscosity)

The melt viscosity of the PAS resin used in the present embodiment is not particularly limited, but because the balance between fluidity and mechanical strength is improved, the metal viscosity (V6) measured at 300°C is preferably within a range of 2 Pa s or more, preferably within a range of 3000 Pa·s or less, more preferably within a range of 500 Pa·s or less, and still more preferably within a range of 200 Pa·s or less. However, the melt viscosity (V6) of the PAS resin is measured by using flow tester CFT-500D manufactured by Shimadzu Corporation, and the measured value is the melt viscosity measured after maintaining for 6 minutes at 300°C and a load of $1.96 \times 10^6$ Pa with L/D = 10 (mm)/1 (mm).

(Non-Newtonian index)

The non-Newtonian index of the PAS resin used in the present embodiment is not particularly limited, but is preferably within a range of 0.90 or more and 2.00 or less. When the linear PAS resin is used, the non-Newtonian index is preferably within a range of 0.90 or more, more preferably within a range of 0.95 or more, preferably within a range of 1.50 or less, and more preferably within a range of 1.20 or less. Such a PAS resin is excellent in mechanical-physical properties, fluidity, and abrasion resistance. However, in the present invention, the non-Newtonian index (N value) is a value obtained by measuring shear rate (SR) and shear stress (SS) using Capilograph under the conditions including the melting point + 20°C and a ratio LID = 40 of orifice length (L) to orifice diameter (D), and calculation using a formula below. It is indicated that the nearer to 1 the non-Newtonian index (N value) is, the nearer to linear the structure is, and the higher the non-Newtonian index (N value) is, the more branched the structure is.

[Math. 1]

$$SR = K \cdot SS^{N}$$

[Provided that SR represents the shear rate second-1, SS represents the shear stress (dyne/$cm^2$), and K represents a constant.]

(Production method

The production method for the PAS resin is not particularly limited, however, examples thereof include a method (production method 1) of adding a dihalogeno-aromatic compound and, if required, a polyhalogeno-aromatic compound or another a copolymerization component in the presence of sulfur and sodium carbonate and polymerizing these compounds, a method (production method 2) of adding a dihalogeno-aromatic compound and, if required, a polyhalogeno-aromatic compound or another a copolymerization component in the presence of a sulfidation agent or the like in a polar solvent and polymerizing these compounds, a method (production method 3) of adding p-chclorothiophenol and, if required, another copolymerization component and then self-condensing these compounds, a method (production method 4) of melt-polymerizing a diiodo-aromatic compound and elemental sulfur in the presence of a polymerization inhibitor, which may have a functional group such as a carboxyl group, an amino group, or the like, under reduced pressure, and the like. Among these methods, the method (production method 2) is versatile and thus is preferred. In order to adjust the polymerization degree, an alkali metal salt of carboxylic acid or sulfonic acid or alkali hydroxide may be added during reaction. In the method (production method 2), the PAS resin is particularly preferably obtained by a production method in which a hydrous sulfidation agent is introduced into a mixture containing a heated organic polar solvent and a dihalogeno-aromatic compound at a rate such that water can be removed from the reaction mixture, and the dihalogeno-aromatic compound and the sulfidation agent, and if required, a polyhalogeno-aromatic compound are added in the organic polar solvent and reacted, and the amount of water in the reaction system is controlled within a range of 0.02 to 0.5 moles per mole of the organic polar solvent (refer to Japanese Unexamined Patent Application Publication No. 07-228699), or a method in which a dihalogeno-aromatic compound and, if required, a polyhalogeno-aromatic compound or another copolymerization component are added in the presence of a solid alkali metal sulfide and an aprotic polar organic solvent and reacted while alkali metal hydrosulfide and organic acid alkali metal salt are controlled within a range of 0.01 to 0.9 moles of organic acid alkali metal salt, and the amount of water in the reaction system is controlled within a range of 0.02 moles or less relative to 1 mole of the aprotic polar organic solvent (refer to pamphlet of WO2010/058713). Examples of the dihalogeno-aromatic compound include p-dihalobenzene, m-dihalobenzene, o-dihalobenzene, 2,5-dihalotoluene, 1,4-dihalonaphthalene, 1-mehtoxy-2,5-dihalobenzene, 4,4'-dihalobiphenyl, 3,5-dihalo-benzoic acid, 2,4-dihalo-benozic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and a compound having an alkyl group having a range of 1 to 18 carbon atoms in the aromatic ring of each of the compounds described above. Examples of the polyhalogeno-aromatic compound include 1,2,3-trihalobenzene, 1,2,4-trihalobenzene, 1,3,5-trihalobenzene, 1,2,3,5-tetrahalobenzene, 1,2,4,5-tetrahalobenzene, 1,4,6-trihalonaphthalene, and the like. In addition, the halogen atom contained in each of the compounds is desirably a chlorine atom or a bromine atom.

Examples of a method for post-treatment of the reaction mixture containing the PAS resin obtained by the polymerization step include, but are not particularly limited to, a method (post-treatment 1) in which after the completion of polymerization reaction, first the solvent is distilled off from the reaction mixture under reduced pressure or atmospheric pressure as it is or after an acid or base is added, then the solid after distillation off of the solvent is washed one or two or more times with a solvent, such as water, the reaction solvent (or an organic solvent having equivalent solubility for

a low-molecular polymer), acetone, methyl ethyl ketone, an alcohol, or the like, and further neutralized, water-washed, filtered, and dried, a method (post-treatment 2) in which after the completion of polymerization reaction, a solvent (a solvent soluble in the polymerization solvent used and a poor solvent for at least PAS) such as water, acetone, methyl ethyl ketone, an alcohol, an ether, halogenated hydrocarbon, aromatic hydrocarbon, aliphatic hydrocarbon, or the like is added as a sedimentation agent to the reaction mixture to sediment the solid products such as PAS and inorganic salts etc., which are then filtered off, washed, and dried, a method (post-treatment 3) in which after the completion of polymerization reaction, the reaction solvent (or an organic solvent having equivalent solubility for a low-molecular polymer) is added to the reaction mixture and stirred, and then a low-molecular-weight polymer is removed by filtration, washed one or two or more times with a solvent such as water, acetone, methyl ethyl ketone, an alcohol, or the like, and then neutralized, water-washed, filtered, and dried, a method (post-treatment 4) in which after the completion of polymerization reaction, the reaction mixture is water-washed by adding water, filtered, and if required, treated with an acid by adding an acid during water washing, and dried, a method (post-treatment 5) in which after the completion of polymerization reaction, the reaction mixture is filtered and, if required, washed one or two or more times with the reaction solvent, and further washed with water, filtered, and dried, and the like. Among these methos, the method (post-treatment 4) is preferred because metal atoms of sodium or the like present at the molecular terminals of the PAS resin can be effectively removed, and the PAS resin having a low sodium content can be obtained.

In the post-treatment method exemplified by the (post-treatment 1) to (post-treatment 5) described above, the PAS resin may be dried in vacuum, air, or an inert gas atmosphere of nitrogen. In addition, the resultant PAS resin may be further heat-treated and used as a crosslinked PAS resin.

<Inorganic particles (B)>

The PAS resin mixture according to the present embodiment is prepared by mixing the inorganic particles (B) as an essential component.

A silicate salt and/or a hydrotalcite compound can be used as a raw material of the inorganic particles (B) used in the present embodiment. A material known by person skilled in the art can be used as the raw material as long as it contains a silicate salt or hydrotalcite compound as a main component, and the properties, shape, particle diameter, and aspect ratio can be properly adjusted according to applications of a molded article.

The silicate salt is not particularly limited unless the effect of the present invention is impaired, and examples thereof include zeolite, aluminum silicate, magnesium silicate, calcium silicate, mica, talc, kaolin, montmorillonite, clay, pyrophyllite, bentonite, sericite, silica, and the like. From the viewpoint of mechanical strength and suppression of generated gas, zeolite, aluminum silicate, or magnesium silicate is particularly preferably contained.

When zeolite is used as the inorganic particles (B), either natural or synthetic zeolite can be used and combination of both can also be used. Examples of natural zeolite include analcime, wairakite, natrolite, mesolite, thomsonite, gonnardite, scolecite, edingtonite, gismondine, leumontite, mordenite, yugawaralite, erionite, ashcroftine, heulandite, clinoptilolite, stilbite, epistilbite, dachiardite, phillipsite, harmotome, gmelinite, chabazite, faujasite, and the like. Examples of the synthetic zeolite include type A, type X, type Y, type L, beta type, mordenite, chabasite, ferrierite, MCM-22, and the like. From the viewpoint of moisture releasability during melt-kneading and improvement in mechanical strength, type-A zeolite or type-X zeolite is preferred. A calcium coordinated form or a sodium coordinated form is more preferred.

When the hydrotalcite compound is used as the inorganic particles (B), either a natural or synthetic hydrotalcite compound can be used as long as the compound has a hydrotalcite structure, and combination of both can also be used. The hydrotalcite compound can be used without being limited by the crystal structure, crystal particles, etc. The hydrotalcite compound is an inorganic compound or fired product thereof which has a structure having divalent metal ion and trivalent metal ion hydroxides as a layered crystal structure and anions between the layers of the layered crystal structure. Examples of the divalent metal ion constituting the hydrotalcite compound include $Mg^{2+}$, $Mn^{2+}$, $Fe^{2+}$, $Co^{2+}$, $Ni^{2+}$, $Cu^{2+}$, and $Zn^{2+}$, examples of the trivalent metal ion include $Al^{3+}$, $Fe^{3+}$, $Cr^{3+}$, $Co^{3+}$, and $In^{3+}$. Examples of anion include $OH^-$, $F^-$, $Cl^-$, $Br^-$, $NO_3^-$, $CO_3^-$, $SO_4^{2-}$, $Fe(CN)_6^{3-}$, $CH_3COO^-$, molybdic acid ion, polymolybdic acid ion, vanadic acid ion, and polyvanadic acid ion.

The inorganic particles (B) are preferably inorganic particles in a water-containing state (hydrous inorganic particles), and with respect to the specific water content, water is contained at a content of 15 parts by mass or more, more preferably 20 parts by mass or more, preferably 70 parts by mass or less, and more preferably 60 parts by mass or less in 100 parts by mass of the inorganic particles (B). With the water content lower than the range, the effect of decreasing gas generation is decreased, while with the water content higher than the range, water cannot be stably maintained in the hydrous material and handling and control become difficult. The water content can be measured by a method described in examples. The water content of the inorganic particles (B) can be adjusted to a proper value by maintaining in a wet heat atmosphere or the like.

The mixing amount of the inorganic particles (B) is not particularly limited unless the effect of the present invention is impaired, but the mixing amount relative to 100 parts by mass of the PAS resin (A) is preferably within a

range of 0.3 parts by mass or more, more preferably 0.4 parts by mass or more, still more preferably 0.5 parts by mass or more, preferably within a range of 10 parts by mass or less, more preferably 5 parts by mass or less, and still more preferably 4 parts by mass or less. The hydrous material having a water content within the range described above can produce a resin composition having the excellent effect of suppressing gas generation and produce a molded article having excellent mechanical strength.

The average particle diameter ($D_{50}$) of the inorganic particles (B) used in the present embodiment is not particularly limited, but from the viewpoint of excellent mechanical strength and fluidity, the upper limit value thereof is preferably about 45 μm, more preferably about 30 μm, still more preferably about 25 μm, and particularly preferably about 20 μm. On the other hand, from the viewpoint of mechanical strength and thermal conductivity, the lower limit value thereof is preferably 1 μm, more preferably about 5 μm, and still more preferably about 11 μm. The average particle diameter of the inorganic filler (B) is the average particle diameter ($D_{50}$) determined based on a particle size distribution measured by a general method using laser diffraction/scattering particle size distribution analyzer (Microtrac MT3300EXII).

The inorganic particles (B) processed with a surface treatment agent or a sizing agent can also be used in the present embodiment. This is preferred because adhesive force to the PAS resin can be improved. The surface treatment agent or sizing agent is not particularly limited but is, for example, at least one polymer or the like selected from the group consisting of a silane compound, a titanate compound, acrylic resin, a urethane resin, a polyether resin, an epoxy resin, and the like, which have a functional group such as an amino group, an epoxy group, an isocyanate group, a vinyl group, or the like.

The amount of water derived from the inorganic particles (B) in the PAS resin mixture according to the present embodiment relative to the 100 parts by mass of the PAS resin is preferably within a range of 0.2 parts by mass or more, more preferably 0.3 parts by mass or more, and still more preferably 0.4 parts by mass or more, and preferably within a range of 5 parts by mass or less, more preferably 4 parts by mass or less, and still more preferably 3 parts by mass or less. With the range described above, the amount of water discharged from the inorganic particles (B) during melt kneading is made appropriate, and a low-molecular-weight impurity (one of the main components of generated gas) in the resin composition can be sufficiently discharged to the outside of the system by azeotrope with water. Thus, the amount of gas generated during molding of the resultant resin composition can be decreased.

If required, a filler (referred to as the "other filler" hereinafter) other than the inorganic particles (B) can be mixed as an optional component in the PAS resin mixture according to the present embodiment. A known common material can be used as the other filler unless the effect of the present invention is impaired, and examples thereof include fillers with various shapes such as a fibrous shape, a nonfibrous shape, a plate shape, and the like. Specific usable examples include fibrous fillers such as fibers, such as glass fibers, carbon fibers, ceramic fibers, aramid fibers, metal fibers, potassium titanate, wollastonite, and the like, natural fibers, and the like, and nonfibrous fillers such as glass flakes, milled fibers, barium sulfate, attapulgite, ferrite, boehmite, graphite, calcium carbonate, and the like.

In the present embodiment, the other filler is not an essential component, but when it is mixed, the mixing amount is not particularly limited unless the effect of the present invention is impaired. The mixing amount of the other filler relative to 100 parts by mass of the PAS resin (A) is, for example, preferably within a range of 1 part by mass or more and more preferably 10 parts by mass or more, and preferably within a range of 600 parts by mass or less and more preferably 200 parts by mass or less. The range described above is preferred because the resin composition exhibits good moldability, and the molded article has excellent mechanical properties.

If required, a silane coupling agent can be mixed as an optional component in the PAS resin mixture according to the present embodiment. A PAS resin silane coupling agent of the present invention is not particularly limited unless the effect of the present invention is impaired, but, for example, a silane coupling agent having a functional group reacting with a carboxyl group, such as an epoxy group, an isocyanate group, an amino group, or a hydroxyl group, is preferred. Examples of such a silane coupling agent include epoxy group-containing alkoxy silane compounds such as γ-glycidoxypropyl trimethoxysilane, γ-glycidoxypropyl triethoxysilane, β-(3,4-epoxycyclohexyl)ethyl trimethoxysilane, and the like, isocyanate group-containing alkoxy silane compounds such as γ-isocyanatopropyl trimethoxysilane, γ-isocyanatopropyl triethoxysilane, γ-isocyanatopropyl methyldimethoxysilane, γ-isocyanatopropyl methyldiethoxysilane, γ-isocyanatopropyl ethyldimethoxysilane, γ-isocyanatopropyl ethyldiethoxysilane, γ-isocyanatopropyl trichlorosilane, and the like, amino group-containing alkoxy silane compounds such as γ-(2-aminoethyl)aminopropyl methyldimethoxysilane, γ-(2-aminoethyl)aminopropyl trimethoxysilane, γ-aminopropyl trimethoxysilane, and the like, and hydroxyl group-containing alkoxy silane compounds such as γ-hydroxypropyl trimethoxysilane, γ-hydroxypropyl triethoxysilane, and the like. In the present invention, the silane coupling agent is not the essential component, but when it is mixed, the mixing amount is not particularly limited unless the effect of the present invention is impaired. The adding amount relative to 100 parts by mass of the PAS resin (A) is preferably within a range of 0.01 parts by mass or more, more preferably 0.1 parts by mass or more, preferably 10 parts by mass or less, and more preferably 5 pats by mass or less. The range described above is preferred because the resin composition has good moldability, particularly good releasability, and the mechanical strength of the molded article is improved.

If required, a thermoplastic elastomer can be mixed as an optional component in the PAS resin mixture according to the present embodiment. Examples of the thermoplastic elastomer include a polyolefin-based elastomer, a fluorine-based elastomer, and a silicone-based elastomer, and among these, the polyolefin-based elastomer is preferred. When the elastomer is added, the mixing amount is not particularly limited unless the effect of the present invention is impaired, but the mixing amount relative to 100 parts by mass of the PAS resin (A) is preferably within a range of 0.01 parts by mass or more, more preferably 0.1 parts by mass or more, preferably 15 parts by mass or less, and more preferably 10 parts by mass or less. The range described above is preferred because the impact resistance of the resultant molded article is improved.

Examples of the polyolefin-based elastomer include α-olefin homopolymer, a copolymer of two or more α-olefins, and a copolymer of one or two or more α-olefins with a vinyl polymerizable compound having a functional group. In this case, examples of the α-olefins include α-olefins having a range of 2 or more and 8 or less carbon atoms, such as ethylene, propylene, 1-butine, and the like. Examples of the functional group include a carboxyl group, an acid anhydride group (-C(=O)OC(=O)-), an epoxy group, an amino group, a hydroxyl group, a mercapto group, an isocyanate group, an oxazoline group, and the like. The vinyl polymerizable compound having the functional group is, for example, one or two or more of vinyl acetate; α,β-unsaturated carboxylic acids such as (meth)acrylic acid and the like; α,β-unsaturated carboxylic acid alkyl esters such as methyl acrylate, ethyl acrylate, butyl acrylate, and the like; α,β-unsaturated carboxylic acid metal salts (as a metal, an alkali metal such as sodium, an alkaline-earth metal such as calcium, zinc, or the like) such as ionomer and the like; α,β-unsaturated carboxylic acid glycidyl esters such as glycidyl methacrylate and the like; α,β-unsaturated dicarboxylic acids such as maleic acid, fumaric acid, itaconic acid, and the like; derivatives (monoester, diester, and acid anhydride) of the α,β-unsaturated dicarboxylic acids; and the like. The thermoplastic elastomers may be used alone or in combination of two or more.

Further, in addition to the components described above, a synthetic resin (simply referred to as a "synthetic resin" hereinafter) can be properly mixed as an optional component in the PAS resin mixture of the present embodiment according to application. The synthetic resin is a polyester resin, a polyamide resin, a polyimide resin, a polyetherimide resin, a polycarbonate resin, a polyphenylene ether resin, a polysulfone resin, a polyether sulfone resin, a polyether ether ketone resin, a polyether ketone resin, a polyarylate resin, a polyethylene resin, a polypropylene resin, a polytetrafluoroethylene resin, a polydifluoroethylene resin, a polystyrene resin, an ABS resin, a phenol resin, a urethane resin, a liquid crystal polymer, or the like. In the present invention, the synthetic resin is not the essential component, but when it is mixed, the mixing ratio is not particularly limited unless the effect of the present invention is impaired, and depends on purposes and cannot be generally specified. However, the ratio of the synthetic resin mixed in the resin composition according to the present embodiment is, for example, the degree of a range of 5 parts by mass or more and a range of 15 parts by mass or less relative to 100 parts by mass of the PAS resin (A). In other words, the ratio based on mass of the PAS resin to the total of the PAS resin (A) and the synthetic resin is preferably within a range of (100/115) or more and more preferably (100/105) or more.

In addition, if required, a known common additive may be mixed as an optional component in the PAS resin mixture according to the present embodiment. The additive is a coloring agent, an antistatic agent, an antioxidant, a heat-resistant stabilizer, an ultraviolet stabilizer, an ultraviolet absorber, a foaming agent, a flame retardant, a flame retardant promoter, an anti-rust agent, a mold release agent (a metal salt or ester of a fatty acid having 18 to 30 carbon atoms, such as stearic acid, montanic acid, or the like, polyolefin-based wax such as polyethylene, or the like), or the like. The additive is not the essential component and may be properly adjusted and used preferably within a range of 0.01 parts by mass or more and preferably within a range of 1000 parts by mass or less, more preferably 100 parts by mass or less, and still more preferably 10 parts by mass or less according to purpose and application so as not to impair the effect of the present invention.

A method for producing a PAS resin mixture according to the present embodiment is a method for producing a PAS resin mixture by mixing a PAS resin (A) and inorganic particles (B) as essential component, the method including a step (1) of adjusting the water content of the inorganic particles (B) to 15% to 70% by mass, and a step (2) of mixing the PAS resin (A) and the inorganic particles (B) at a ratio such that the amount of water derived from the inorganic particles (B) is 0.2 to 5 parts by mass relative to 100 parts by mass of the PAS resin (A), producing a mixture. The inorganic particles (B) are a silicate salt and/or hydrotalcite compound. Detailed description is made below.

Step (1)

The method for producing a PAS resin mixture according to the present embodiment includes a step of adjusting the water content of the inorganic particles (B) to 15% to 70% by mass.

A method for adjusting the water content of the inorganic particles (B) is not particularly limited, and a known method and apparatus can be used. For example, the method includes maintaining in a humidistat or water to a desired water content.

Step (2)

The method for producing a PAS resin mixture according to the present embodiment includes a step of mixing the PAS resin (A) and the inorganic particles (B) at a ratio such that the amount of water derived from the inorganic particles (B) is 0.2 to 5 parts by mass relative to 100 parts by mass of the PAS resin (A), producing a mixture.
A method for mixing the PAS resin (A) and the inorganic particles (B) is not particularly limited, and a known method and apparatus can be used. For example, the method includes uniformly dry-mixing the essential components and, if required, optional components in a tumbler or a Henschel mixer, or the like.

<PAS resin composition>

A PAS resin composition according to a present embodiment is prepared by melt-kneading a PAS resin mixture. Also, a method for producing the PAS resin composition according to the present embodiment includes a step of melt-kneading the PAS resin mixture within a temperature range higher than or equal to the melting point of the PAS resin (A). Examples of a method for producing a resin composition used in the present invention include, but are not particularly limited to, a method of adding and melt-kneading in an extruder.
Melt-kneading can be performed by heating to a temperature within a temperature range in which the resin temperature is higher than or equal to the melting point of the PAS resin (A), preferably a temperature range of the melting point + 10°C or more, more preferably the melting point + 10°C or more, still more preferably the melting point + 20°C or more, preferably the melting point + 100°C or less, and more preferably the melting point + 50°C or less.
From the viewpoint of dispersibility and productivity, a melt-kneader is preferably a twin-screw kneading extruder, and for example, melt-kneading is preferably performed while properly adjusting the discharge amount of the resin component within a range of 5 to 500 (kg/hr) and the screw rotational speed within a range of 50 to 500 (rpm), and melt-kneading is more preferably performed under the condition that the ratio (discharge amount/screw rotational speed) is within a range of 0.02 to 5 (kg/rpm). The components may be simultaneously or dividedly added and mixed in the melt-kneader. For example, when if required the other fibrous filler is added, from the viewpoint of dispersibility, the filler is preferably charged in the twin-screw kneading extruder from a side feeder of the extruder. The position of the side feeder is preferably such that the ratio of the distance from the resin inlet part (top feeder) of the extruder to the side feeder relative to the total screw length of the twin-screw kneading extruder is preferably 0.1 or more and more preferably 0.3 or more. Also, the ratio is preferably 0.9 or less and more preferably 0.7 or less.
The PAS resin composition according to the present embodiment produced by melt-kneading as described above is a melt mixture containing the essential components and the optional component added if required and the components derived therefrom. Therefore, the PAS resin composition according to the present embodiment has a morphology in which the PAS resin (A) forms a continuous phase and the other essential components and optional components are dispersed. After the melt-kneading, the PAS resin composition according to the present embodiment is preferably subjected to a known method in which, for example, the resin composition in a melt state is extrusion-molded into a strand shape, then solidified by cooling, further processed in a shape such as pellets, chips, granules, powder, or the like, and then, if required, pre-dried within a temperature range of 100°C to 150°C.

<PAS resin molded article>

A molded article according to a present embodiment is produced by melt-molding a PAS resin composition. A method for producing a molded article according to a present embodiment includes a step of melt-molding the PAS resin composition. Therefore, the molded article according to the present embodiment has a morphology in which the PAS resin (A) forms a continuous phase and the other essential components and optional components are dispersed. The PAS resin molded article has the morphology, and thus a molded article having excellent chemical resistance, heat resistance, and mechanical strength can be obtained.
The PAS resin composition according to the present embodiment can be used for various moldings such as injection molding, compression molding, extrusion molding of a composite, a sheet, a pipe, and the like, pultrusion molding, blow molding, transfer molding, 3D-printing molding, and the like, and particularly suitable for injection molding application because of excellent moldability such as releasability and continuous moldability. In the case of molding by injection molding, various molding conditions are not particularly limited, and molding can be usually performed by a general method. For example, in an injection molding machine, after the step of melting the PAS resin composition within a temperature range in which the resin temperature is higher than or equal to the melting point of the PAS resin, preferably a temperature range of the melting point + 10°C or more, more preferably a temperature range of the melting point + 10°C to the melting point + 100°C, and still more preferably within a temperature range of the melting point + 20°C to the melting point + 50°C, the composition may be injected into a mold from a resin discharge port and molded. In this case, the mold temperature may be also determined within a known temperature range, for example, room temperature

(23°C) to 300°C, and preferably 130°C to 190°C.

The method for producing a molded article according to the present embodiment may include a step of annealing treatment of the molded article. The optimum conditions for annealing treatment are selected according to application, shape, or the like of the molded article, but the annealing temperature is within a temperature range higher than or equal to the glass transition temperature of the PAS resin (A), preferably a temperature range of the glass transition temperature + 10°C or more, and more preferably a temperature range of the glass transition temperature + 30°C or more. On the other hand, a range of 260°C or less is preferred, and a range of 240°C of less is more preferred. The annealing time is not particularly limited but is preferably within a range of 0.5 hours or more and more preferably a range of 1 hour or more. On the other hand, the annealing time is preferably within a range of 10 hours or less and more preferably a range of 8 hours or less. The range described above is preferred because strain of the resultant molded article is decreased, and the mechanical characteristics and chemical resistance are further improved due to improvement in crystallinity of the resin. The annealing treatment may be performed in air but is preferably performed in an inert gas such as nitrogen gas or the like.

The PAS resin molded article according to the present embodiment is characterized by excellent moldability and mechanical strength, and is thus suitable for various components of applications such as automobile part application, electric/electronic component application, around water application, and the like. Examples thereof include electric/electronic components represented by a plurality of individual semiconductors or modules of a protective/support member for a box-shaped electric/electronic component integrated module, a sensor, a LED lamp, a connector, a socket, a resistor, a relay case, a switch, a coil bobbin, a condenser, s variable condenser case, an optical pickup, an oscillator, various terminal boards, a transformer, a plug, a printed circuit board, a tuner, a speaker, a microphone, a headphone, a small motor, a magnetic head base, a power module, a terminal block, a semiconductor, a liquid crystal, a FDD carriage, a FDD chassis, a motor brush holder, a parabolic antenna, computer-related components, and the like; home/office electric appliance components, a represented by VTR part, a television part, an iron, a hair dryer, a rice cooker part, a microwave oven part, an acoustic component, audio/video equipment components such as audio/laser disk/compact disk/DVD disk/blue ray disk, and the like, a lighting component, a refrigerator component, an air conditioner component, a typewriter component, a word processor component, water-related apparatus components such as a water heater, a hot water amount ad temperature sensor of a bath, and the like; machine components represented by an office computer-related component, a telephone-related component, a facsimile-related component, a copying machine-related component, a washing jig, a motor component, a writer, a typewriter, and the like: optical equipment/ precision machine-related components represented by a microscope binocular, a camera, a watch, and the like; automobile/vehicle-related components such as an alternator terminal, an alternator connector, a brush holder, a slip ring, an IC regulator, a potentiometer base for light dimmer, a relay block, an inhibitor switch, various valves such as an exhaust gas valve, and the like, various pipes for fuel-related/exhaust system/intake system components, an air intake nozzle snorkel, an intake manifold, an engine cooling water joint, a carburetor main body, a carburetor spacer, an exhaust gas sensor, a cooling water senser, an oil temperature sensor, a brake pad wear sensor, a throttle position sensor, a crankshaft position sensor, a temperature sensor, an air flow meter, a brake pad wear sensor, a thermostat base for air conditioner, a heating warm air flow control valve, a brush holder for a radiator motor, a water pump impeller, a turbine vane, wiper motor-related components, a distributer, a starter switch, an ignition coil and its bobbin, a motor insulator, a motor rotor, a motor core, a starter relay, a wire harness for transmission, a window washer nozzle, an air conditioner panel switch board, a coil for a fuel-related electromagnetic valve, a connector for a fuse, a horn terminal, an electrical component insulating plate, a step motor rotor, a lamp socket, a lamp reflector, a lamp housing, a brake piston, a solenoid bobbin, an engine oil filter, an ignition device case, and the like. The resin molded article can also be applied to various other applications.

## EXAMPLES

The present invention is described below by using examples and comparative examples, but is not limited to these examples. In addition, "%" and "parts" are on mass basis unless otherwise described.

### <EXAMPLES 1 to 8 and COMPARATIVE EXAMPLES 1 to 13>

A mixture was prepared by mixing materials according to the composition components and the mixing amounts described in Tables 1 to 3. Then, the mixture was added to a win-screw extruder with a vent "TEX-30α (product name) manufactured by Japan Steel Works, Ltd. and melt-kneaded at a resin component discharge amount of 30 kg/hr, a screw rotation speed of 200 rpm, and a set resin temperature of 320°C, producing resin composition pellets. Glass fibers were charged from a side feeder (S/T ratio: 0.5), and the other materials were previously uniformly mixed and then charged from a top feeder. The resultant resin composition pellets were dried by heating in a gear oven of 140°C for 2 hours and then injection-molded to form a test piece used for tests described below.

<Evaluation>

(1) Measurement of water content of each material

The mass of about 8.0 mg of a material was precisely measured by placing in a Pt-made pan for TG-DTA measurement. The Pt pan in which the material was placed was heated from room temperature to 300°C at a heating rate of 10°C/min in an air stream using TG-DTA (TG-DTA6200, manufactured by SII Technologies Ltd.), removing water. The water content was calculated by a formula below. Also, the amount of water derived from the hydrous material of each of the resin compositions was calculated from the obtained water content and mixing amount. The results are shown in Tables 1 to 3.

Water content [wt%] = (mass before heating [mg] - mass after heating [mg])/(mass before heating [mg]) × 100

(2) Measurement of weight loss (amount of gas generated)

Weighed was 5.00 g of the resultant resin composition pellets in an aluminum-mase schale. The sample was allowed to stand for 1 hour in a dryer set to 150°C, and then the schale was taken out, cooled to room temperature, and weighed. Then, the schale was allowed to stand for 1 hour in a dryer to 370°C and then the schale was taken out, cooled to room temperature, and then weighted. The amount of gas generated of each sample was calculated by a formula below. The results are shown in Table 1 to 3.

Amount of gas generated [wt%] = (weighing value after heating to 150°C [g] - weighing value after heating to 370°C [g])/(weighing value after heating to 150°C [g]) × 100

(3) Measurement of tensile strength

The resultant resin composition pellets were supplied to an injection molding machine (SE-75D-HP) manufactured by Sumitomo Heavy Industries, Ltd. set to a cylinder temperature of 310°C, and injection-molded by using a mold for ISO Type-A dumbbell piece molding, adjusted to a mold temperature of 140°C, producing an ISO Type-A dumbbell piece. In addition, the dumbbell piece was formed by injecting the resin from a single gate so as to obtain a test piece without containing a weld portion. The tensile strength of the resultant dumbbell piece was measured according to the measurement method of ISO 527-1 and 2. The results are shown In Table 1 to 3.

(4) Evaluation of moldability (releasability)

The moldability (releasability) for injection molding of the resin composition of each of the examples and comparative examples was evaluated by using the molding machine and the mold for ISO Type-A dumbbell piece molding used in (3). In the injection molding machine, the cylinder temperature was set to 310°C, and the mold temperature was set to 140°C. With respect to evaluation, the resin composition pellets were injected into the mold and solidified by being maintained for 15 seconds or more, and then the presence of sticking of the dumbbell piece to the mold was confirmed when the molded was opened. Injection molding was performed 20 times, and evaluation was made according to criteria below. The evaluation results are shown in Tables 1 to 3.

A: No sticking is observed, and continuous molding can be performed.
B: Sticking to the mold is observed 1 to 10 times, and continuous molding cannot be performed.
C: Sticking to the mold is observed 10 to 20 times, and continuous molding cannot be performed.

[Table 1]

| | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
| Compositio n | A-1 | wt% | 100 | 100 | 100 | | 100 | 100 | 100 | 100 | |
| | A-2 | wt% | | | | 100 | | | | | 100 |
| | B-1 | wt% | 3.3 | 1.7 | 3.3 | 3.3 | | 0.2 | 21.0 | | |
| | C-1 | wt% | 0.5 | 0.5 | 0.5 | 0.5 | 0.5 | 0.5 | 0.5 | 0.5 | 0.5 |
| | D-1 | wt% | 66.7 | 66.7 | 66.7 | 66.7 | 66.7 | 66.7 | 66.7 | 66.7 | 66.7 |
| | E-1 | wt% | | | 10.0 | | | | | 10.0 | |
| | Amount of water derived from hydrous material | wt% | 0.83 | 0.42 | 0.83 | 0.83 | 0.00 | 0.05 | 5.25 | 0.00 | 0.00 |
| Evaluation | Weight loss | wt% | 0.17 | 0.23 | 0.34 | 0.15 | 0.48 | 0.48 | 0.12 | 1.11 | 0.25 |
| | Tensile strength | MPa | 158 | 151 | 143 | 190 | 144 | 144 | 124 | 130 | 175 |
| | Moldability evaluation | wt% | A | A | A | A | B | B | A | C | A |

[Table 2]

| | | | Example 5 | Example 6 | Example 7 | Example 8 | Comparative Example 6 | Comparative Example 7 | Comparative Example 8 | Comparative Example 9 |
|---|---|---|---|---|---|---|---|---|---|---|
| Composition | A-1 | wt% | 100 | 100 | 100 | 100 | 100 | 100 | 100 | 100 |
| | B-2 | wt% | 3.3 | | | | | | | |
| | B-3 | wt% | | 3.3 | | | | | | |
| | B-4 | wt% | | | 3.3 | | | | | |
| | B-5 | wt% | | | | 3.3 | | | | |
| | b-5 | wt% | | | | | 3.3 | | | |
| | b-6 | wt% | | | | | | 3.3 | | |
| | b-7 | wt% | | | | | | | 3.3 | |
| | b-8 | wt% | | | | | | | | 0.8 |
| | C-1 | wt% | 0.5 | 0.5 | 0.5 | 0.5 | 0.5 | 0.5 | 0.5 | 0.5 |
| | D-1 | wt% | 66.7 | 66.7 | 66.7 | 66.7 | 66.7 | 66.7 | 66.7 | 66.7 |
| | Amount of water derived from hydrous material | wt% | 0.73 | 0.90 | 0.90 | 1.72 | 0.17 | 0.13 | 0.07 | 0.90 |
| Evaluation | Weight loss | wt% | 0.20 | 0.21 | 0.21 | 0.15 | 0.46 | 0.45 | 0.45 | 0.43 |
| | Tensile strength | MPa | 158 | 156 | 155 | 150 | 158 | 145 | 146 | 130 |
| | Moldability evaluation | | A | A | A | A | B | B | B | B |

[Table 3]

| | | | Comparative Example 10 | Comparative Example 11 | Comparative Example 12 | Comparative Example 13 |
|---|---|---|---|---|---|---|
| Composition | A-1 | wt% | 100 | 100 | 100 | 100 |
| | b-9 | wt% | 3.3 | | | |
| | b-10 | wt% | | 3.3 | | |
| | b-11 | wt% | | | 3.3 | |
| | b-12 | wt% | | | | 3.3 |
| | C-1 | wt% | 0.5 | 0.5 | 0.5 | 0.5 |
| | D-1 | wt% | 66.7 | 66.7 | 66.7 | 66.7 |
| | Amount of water derived from hydrous material | wt% | 0.03 | 0.50 | 1.62 | 0.80 |
| Evaluation | Weight loss | wt% | 0.48 | 0.21 | 0.15 | 0.18 |
| | Tensile strength | MPa | 143 | 140 | 137 | 143 |
| | Moldability evaluation | | B | A | A | A |

A-1: PPS resin (melt viscosity (V6) 21 Pa·s, linear type)

A-2: PPS resin (melt viscosity (V6) 45 Pa s, crosslinked type)

B-1: Zeolite Ca-A type, water content: 25% by mass

B-2: Zeolite Ca-A type, water content: 20% by mass

B-3: Zeolite Ca-X type, water content: 25% by mass

B-4: Fired hydrotalcite compound, water content: 50% by mass

b-5: Zeolite Ca-A type, water content: 3%

b-6: Zinc oxide, water content: 2% by mass

b-7: Magnesium oxide, water content: less than 0.1% by mass

b-8: Water

b-9: Silica gel, water content: 1% by mass

b-10: Calcium sulfate dihydrate, water content: 16% by mass

b-11: Calcium chloride hexahydrate, water content: 49% by mass

b-12: Calcium hydroxide, water content: 24% by mass

C-1: 3-glycidoxypropyl trimethoxysilane manufactured by Dow Corning Corp., "SH-6040"

D-1: Glass fibers manufactured by Nippon Electric Glass Co., Ltd. "T-717H" (chopped strand of 10 μm in diameter), water amount: less than 0.1%

E-1: Elastomer manufactured by Sumitomo Chemical Co., Ltd. "Bondfast 7L"

Tables 1 to 3 indicate that the resin compositions and molded articles formed by using the mixtures of the examples exhibit the excellent effect of suppressing gas generation (weight loss) and the excellent effect of good balance between mechanical strength and moldability as compared with the comparative examples.

## Claims

1. A polyarylene sulfide resin mixture comprising a polyarylene sulfide resin (A) and inorganic particles (B),

    wherein the amount of water derived from the inorganic particles (B) is 0.2 to 5 parts by mass relative to 100 parts by mass of the polyarylene sulfide resin(A); and
    the inorganic particles (B) are a silicate salt and/or a hydrotalcite compound.

2. The polyarylene sulfide resin mixture according to Claim 1, wherein the inorganic particles (B) are at least one selected from the group consisting of zeolite, aluminum silicate, magnesium silicate, and a hydrotalcite compound.

3. The polyarylene sulfide resin mixture according to Claim 1 or 2, wherein 15 to 70 parts by mass of water is contained in 100 parts by mass of the inorganic particles (B).

4. The polyarylene sulfide resin mixture according to any one of Claims 1 to 3, wherein 0.3 to 10 parts by mass of the inorganic particles (B) is mixed relative to 100 parts by mass of the polyarylene sulfide resin (A).

5. A resin composition comprising the polyarylene sulfide resin mixture according to any one of Claims 1 to 4, which is melt-kneaded.

6. A molded article comprising the polyarylene sulfide resin composition according to Claim 5, which is melt-molded.

7. A method for producing a polyarylene sulfide resin mixture containing a polyarylene sulfide resin (A) and inorganic particles (B) as essential components, the method comprising:

    a step (1) of adjusting the water content of the inorganic particles (B) to 15% to 70% by mass; and
    a step (2) of obtaining a mixture by mixing the polyarylene sulfide resin (A) and the inorganic particles (B) at a ratio such that the amount of water derived from the inorganic particles (B) is 0.2 to 5 parts by mass relative to 100 parts by mass of the polyarylene sulfide resin (A),
    wherein the inorganic particles (B) are a silicate salt and/or a hydrotalcite compound.

8. The method for producing a polyarylene sulfide resin mixture according to Claim 7, wherein in the step (2), the mixing amount of the inorganic particles (B) is 0.3 to 10 parts by mass relative to 100 parts by mass of the polyarylene sulfide resin (A).

9. A method for producing a polyarylene sulfide resin composition comprising a step of producing a polyarylene sulfide resin mixture by the production method according to Claim 7 or 8, and a step of melt-kneading the resultant mixture within a temperature range higher than or equal to the melting point of the polyarylene sulfide resin (A).

10. A method for producing a molded article comprising a step of producing a polyarylene sulfide resin composition by the production method according to Claim 9 and a step of melt-molding the resultant PAS resin composition.

## INTERNATIONAL SEARCH REPORT

International application No.
**PCT/JP2022/036339**

**A. CLASSIFICATION OF SUBJECT MATTER**

***C08L 81/02***(2006.01)i; ***C08J 3/20***(2006.01)i; ***C08K 3/18***(2006.01)i; ***C08K 3/26***(2006.01)i; ***C08K 3/34***(2006.01)i
FI: C08L81/02; C08K3/26; C08K3/34; C08K3/18; C08J3/20 B CEZ

According to International Patent Classification (IPC) or to both national classification and IPC

**B. FIELDS SEARCHED**

Minimum documentation searched (classification system followed by classification symbols)

C08L81/02; C08J3/20; C08K3/18; C08K3/26; C08K3/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 61-120833 A (MATSUSHITA ELECTRIC WORKS LTD) 07 June 1986 (1986-06-07) claims, p. 1, right column, lines 3-11, p. 4, upper right column, line 9 to p. 6, upper left column, line 4, examples | 1-10 |
| A | JP 09-132711 A (TONEN CHEM CORP) 20 May 1997 (1997-05-20) claims, examples, entire text | 1-10 |
| A | JP 09-104816 A (TONEN CHEM CORP) 22 April 1997 (1997-04-22) claims, examples, entire text | 1-10 |
| A | JP 06-057137 A (TORAY IND INC) 01 March 1994 (1994-03-01) claims, examples, entire text | 1-10 |
| A | JP 2006-111822 A (MITSUBISHI ENGINEERING PLASTICS CORP) 27 April 2006 (2006-04-27) claims, examples, entire text | 1-10 |
| A | JP 2003-221512 A (DAINIPPON INK & CHEM INC) 08 August 2003 (2003-08-08) claims, examples, entire text | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/036339**

**C. DOCUMENTS CONSIDERED TO BE RELEVANT**

| Category* | Citation of document, with indication, where appropriate, of the relevant passages | Relevant to claim No. |
|---|---|---|
| A | CN 102220659 A (TAIYUAN UNIVERSITY OF TECHNOLOGY) 19 October 2011 (2011-10-19) claims, examples, entire text | 1-10 |

Form PCT/ISA/210 (second sheet) (January 2015)

**INTERNATIONAL SEARCH REPORT**
**Information on patent family members**

International application No.
**PCT/JP2022/036339**

| Patent document cited in search report | | | Publication date (day/month/year) | Patent family member(s) | Publication date (day/month/year) |
|---|---|---|---|---|---|
| JP | 61-120833 | A | 07 June 1986 | (Family: none) | |
| JP | 09-132711 | A | 20 May 1997 | (Family: none) | |
| JP | 09-104816 | A | 22 April 1997 | (Family: none) | |
| JP | 06-057137 | A | 01 March 1994 | (Family: none) | |
| JP | 2006-111822 | A | 27 April 2006 | (Family: none) | |
| JP | 2003-221512 | A | 08 August 2003 | (Family: none) | |
| CN | 102220659 | A | 19 October 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006143827 A
- JP 11100505 A
- JP 7228699 A
- WO 2010058713 A